# FASCICULE DE BREVET EUROPEEN

(11) **EP 2 210 663 B1**
(45) Date de publication et mention de la délivrance du brevet: **19.02.2020**
(21) Numéro de dépôt: 09290915.9
(22) Date de dépôt: 07.12.2009
(51) Int. Cl.: B01J 23/28, B01J 27/051, C10G 3/00, C10G 45/04

(54) **Méthode de transformation de charges d'origine renouvelable en carburant d'excellente qualité mettant en oeuvre un catalyseur a base de molybdene**
Umwandlungsverfahren von Einsatzstoffe erneuerbaren Urspungs in einen Kraftstoff ausgezeichneter Qualität unter Einsatz eines Katalysators auf Molybdenbasis
Method for transforming feedstocks from renewable sources into top-quality fuel by implementing a molybdenum-based catalyst

(30) Priorité: 23.12.2008 FR 0807416
(43) Date de publication de la demande: 28.07.2010
(73) Titulaire: IFP Energies nouvelles, 92500 Rueil-Malmaison (FR)
(72) Inventeur: Daudin, Antoine, 69960 Corbas (FR); Bournay, Laurent, 69440 Chaussan (FR); Chapus, Thierry, 69001 Lyon (FR)
(74) Mandataire: IFP Energies nouvelles

(56) Documents cités:
- EP-A- 1 956 070
- WO-A-2007/080288
- US-A1- 2005 211 603
- US-A1- 2008 312 480
- ENERGY AND FUELS 1989 MAR-APR, vol. 3, no. 2, 5 juin 1988 (1988-06-05), pages 160-168, XP002581617

## Description

### Domaine de l'invention

Le contexte international des années 2005-2010 est marqué d'abord par la croissance rapide en besoin de carburants, en particulier de bases gazoles dans la communauté européenne et ensuite par l'importance des problématiques liées au réchauffement planétaire et l'émission de gaz à effet de serre. Il en résulte une volonté de réduire la dépendance énergétique vis à vis des matières premières d'origine fossile et de réduction des émissions de CO2. Dans ce contexte, la recherche de nouvelles charges issues de sources renouvelables et pouvant être facilement intégrées au schéma traditionnel du raffinage et de la production de carburants constitue un enjeu d'une importance croissante.

A ce titre, l'intégration dans le processus de raffinage de nouveaux produits d'origine végétale, issus de la conversion de la biomasse lignocellulosique ou issus de la production d'huiles végétales ou de graisses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux bases pétrolières dans les pools carburants.

La forte demande en carburants gazoles, couplée avec l'importance des préoccupations liées à l'environnement renforce l'intérêt d'utiliser des charges issues de sources renouvelables. Parmi ces charges, on peut citer par exemple les huiles végétales ou issues d'algues, les graisses animales ou les huiles de fritures usagées, brutes ou ayant subi un traitement préalable, ainsi que les mélanges de telles charges. Ces charges contiennent essentiellement des structures chimiques de type triglycérides que l'homme du métier connait également sous l'appellation tri ester d'acides gras ainsi que des acides gras.

La masse moléculaire très élevée (supérieure à 600 g/mol) des triglycérides et la viscosité élevée des charges considérées font que leur utilisation directe ou en mélange dans les gazoles posent des difficultés pour les moteurs modernes de type HDI (compatibilité avec les pompes d'injection à très haute pression, combustion non maîtrisée, rendement faibles, émissions d'imbrûlés toxiques). Cependant, les chaînes hydrocarbonées qui constituent les triglycérides sont essentiellement linaires et leur longueur (nombre d'atomes de carbone) est compatible avec les hydrocarbures présents dans les gazoles. Par ailleurs ces chaînes possèdent un nombre d'instauration généralement compris entre 0 et 3 mais qui peut être plus élevé notamment pour les huiles issues d'algues.

Il est donc nécessaire de transformer ces charges pour obtenir une base gazole de bonne qualité et/ou une coupe kérosène repondant aux spécifications en vigueur, après mélange ou ajout d'additif connu de l'homme de l'art. Pour le diesel, le carburant final doit répondre à la norme EN590 et pour le kérosène, il doit répondre aux spécifications décrites dans IATA (International Air Transport Association) Guidance Material for Aviation Turbine Fuel Spécifications telle que la norme ASTM D1655.

Une approche possible consiste à les convertir par transestérification. Les triglycérides, qui constituent essentiellement de telles charges, sont alors convertis, en présence d'un monoalcool aliphatique, en esters d'acides gras et en glycérine par une réaction de transestérification. Cette réaction peut être catalysée par un catalyseur en phase homogène ou hétérogène. Parmi les inconvénients de cette voie on peut citer : a/ l'augmentation des émissions de NOₓ dans les gaz d'échappement des moteurs à combustion interne en raison de la présence d'oxygène dans les esters ; b/ la température d'ébullition assez élevée, de l'ordre de 360°C, ce qui peut poser problème pour respecter les spécifications de point final du gazole c/ l'obtention d'un indice de cétane non maximisé (autour de 50 ce qui est le minimum requis pour le gazole) et d/ des problèmes liés à la stabilité à l'oxydation en raison de la présence de doubles liaisons sur les chaînes hydrocarbonées.

Une autre voie possible est la transformation catalytique de l'huile végétale en carburant paraffinique désoxygéné en présence d'hydrogène (hydrotraitement). De nombreux catalyseurs métalliques ou sulfures sont connues pour être actifs pour ce type de réaction. Ces procédés d'hydrotraitement d'huiles végétales sont déjà bien connus et sont décrits dans de nombreux brevets. On peut citer par exemple les brevets : US 4,992,605, US 5,705,722, EP 1,681,337 et EP 1,741,768.

Par exemple, la demande de brevet n° EP 1, 681,337 décrit un procédé de transformation de charges issues de sources renouvelables par réaction de désoxygénation pour produire des distillats moyens. Le catalyseur est constitué d'une phase active métallique constituée d'un élément du groupe VIII dispersé sur un support de type oxyde métallique ou carbone. Le procédé comprend également une étape optionnelle d'isomérisation mettant en oeuvre un catalyseur contenant un tamis moléculaire choisi parmi la SAPO-11, la SAPO-41, la ZSM-22, la ferrierite ou la ZSM-23 et un métal du groupe VIII choisi parmi le palladium, le platine et le nickel, ledit procédé opérant à une température comprise entre 200 et 500°C, et à une pression comprise entre 2 et 15 MPa.

Les catalyseurs utilisés pour la réaction de désoxygénation étant des catalyseurs métalliques, cette voie conduit à la formation exclusive de paraffines par décarboxylation/décarbonylation et conduit à la production d'oxydes de carbones. Ceci présente l'avantage d'une consommation d'hydrogène réduite par rapport aux réactions d'hydrodésoxygénation consommatrices d'hydrogène du fait de la production d'eau, mais implique une diminution de rendement en produit valorisable (tel que par exemple les distillats moyens) du fait de la perte d'un atome de carbone par mole d'hydrocarbure sous la forme de CO ou de CO₂.

De plus, les oxydes de carbone produits par les réactions de décarboxylation/décarbonylation donnent lieu à une réaction de méthanation qui présente des inconvénients importants. En effet, les réactions de méthanation du monoxyde de carbone et dioxyde de carbone selon les équilibres suivants :

CO₂ + 4H₂ ⇄ CH₄ + 2H₂O

CO + 3H₂ ⇄ CH₄ + H₂O

donnent lieu à
1/ La formation d'eau : le mélange eau/oxydes de carbones est bien connu de l'homme de l'art pour favoriser la corrosion carbonique néfaste pour les matériaux du procédé.
2/ La purification de l'hydrogène recyclé afin d'éliminer les oxydes de carbones nécessitant par exemple une étape supplémentaire et contraignante de lavages aux amines et/ou de méthanation
3/ une consommation d'hydrogène accrue liée à ces réactions

Les catalyseurs sulfures sont connus pour être actifs vis à vis des réactions d'hydrotraitement : hydrodésulfuration, hydrodésazotation, hydrodésoxygénantion et hydrodémétallation.

De nombreux travaux de la littérature font état de leur potentiel pour les réactions de désoxygénation mises en jeu pour la transformation catalytique de bio-liquide (provenant d'oléagineaux ou de la lignocellulose) en carburant. Notamment, Senol et al (Applied Catalysis A: General vol. 326,2007, p.236-244) ont étudié la transformation de molécule modèle de type ester représentative de la fonction hydrophile (groupement ester) et lipophile (chaîne alkyle) des triglycérides présent dans les huiles végétales en présence de catalyseurs sulfures CoMo ou NiMo/Al₂O₃.

Contrairement aux catalyseurs à base de métaux réduit, l'utilisation de solides à bases de sulfures de métaux de transition permettent la production de paraffines à partir de molécule de type ester selon deux voies réactionnelles :
- L'hydrodésoxygénation conduisant à la formation d'eau par consommation d'hydrogène et à la formation d'hydrocarbures de nombre de carbone égal à celui des chaînes d'acides gras initiales,
- La décarboxylation/décarbonylation conduisant à la formation d'oxydes de carbone (monoxyde et dioxyde de carbone : CO et CO2) et à la formation d'hydrocarbures comptant un carbone en moins par rapport aux chaînes d'acides gras initiales. EP1956070 décrit un procédé d'hydrodésoxygénation de charges issues de sources renouvelables.

US2008/0312480 décrit un procédé d'hydrodésoxygénation de charges issues de sources renouvelables et enseigne que pour favoriser les réactions de déoxygénation il faut choisir un catalyseur comprenant du Mo et au moins un métal choisi parmi le Ni et le Co.

### Objet de l'invention

La présente invention concerne un procédé selon la revendication 1 et utilise un catalyseur supporté ou massique comprenant une phase active constituée d'un élément sulfuré du groupe VIB, l'élément du groupe VIB étant le molybdène, ledit catalyseur, dans le cas ou celui ci est un catalyseur supporté, présentant une teneur en élément du groupe VIB comprise entre 17 et 35% poids d'oxyde dudit élément du groupe VIB par rapport à la masse totale du catalyseur et comprenant également un élément dopant choisis parmi le phosphore, le bore et le silicium, déposé sur ledit support.

On appelle phase active, la phase contenant le ou les éléments sous forme sulfure des groupes des métaux, en l'occurrence la phase active du catalyseur selon l'invention est constituée d'un élément sulfuré du groupe VIB.

La présente invention concerne également un procédé d'hydrodésoxygénation avec conversion par décarboxylation/décarbonylation limitée à au plus 10%, de charges issues de sources renouvelables mettant en oeuvre un catalyseur selon l'invention.

Les charges de départ sont des charges issues de sources renouvelables, telles que les huiles et graisses d'origine végétale ou animale, ou des mélanges de telles charges, contenant des triglycérides et/ou des acides gras. Les huiles végétales utilisées dans la présente invention peuvent être brutes ou raffinées, totalement ou en partie, et issues des végétaux suivants : colza, tournesol, soja, palme, palmiste, ricin, olive, noix de coco, jatropha, cette liste n'étant pas limitative. Les huiles d'algues ou de poisson sont également utilisées dans la présente invention. On peut également citer toutes les graisses animales telles que par exemple le lard, le suif ou les graisses composées de résidus de l'industrie alimentaire ou issus des industries de la restauration telles que par exemple les huiles de fritures usagées.

Les charges ainsi définies contiennent des structures triglycérides et/ou acides gras, dont les chaînes grasses contiennent un nombre d'atomes de carbone compris entre 8 et 25.

Les hydrocarbures produits lors de la conversion des charges de départ selon l'invention sont caractérisés par :
a/ un nombre d'atomes de carbone égal à celui des chaînes des acides gras de départ, si le mécanisme est un mécanisme d'hydrodésoxygénation du groupe carboxylique en groupe alkyl, l'hydrodésoxygénation conduisant à la formation d'eau par consommation d'hydrogène
b/ une chaîne hydrocarbonée comptant un atome de carbone de moins que les chaînes des acides gras de départ, si le mécanisme mis en jeu est une décarboxylation / décarbonylation, ce mécanisme conduisant à la formation d'oxydes de carbone (monoxyde et dioxyde de carbone : CO et CO₂)
c/ un degré de ramification des hydrocarbures ajusté de manière à obtenir des propriétés de tenue à froid et un indice de cétane compatibles avec les normes en vigueur pour le gazole.

Il est connu d'après l'état de l'art que les deux voies de transformation a/ et b/ d'hydrodésoxygénation et décarboxylation / décarbonylation coexistent généralement en présence de catalyseurs sulfures.

L'objectif de la présente invention vise par conséquent à maximiser le rendement en gazole et/ou en kérosène, et cherche à promouvoir le mécanisme d'hydrodésoxygénation décrit en a/. Le choix des catalyseurs et des conditions opératoires vise donc à orienter la sélectivité au bénéfice de l'hydrodésoxygénation, tout en cherchant à limiter au strict nécessaire la consommation d'hydrogène, et en particulier celle qui résulterait de réactions non désirées, telle que la méthanation.

Un autre objectif de la présente invention est la production de distillats moyens constitués d'un carburant gazole de bonne qualité obtenu par isomérisation des paraffines de la coupe gazole en limitant leur craquage en fractions plus légères non désirées telles que par exemple la coupe naphta, et d'une coupe kérosène répondant aux spécifications, tout en minimisant la production de naphtas.

De manière surprenante, il a été mis en évidence qu'il était possible de contrôler la sélectivité des réactions d'hydrodésoxygénation de charges issues de sources renouvelables en fonction de la nature de la phase active. Ainsi, le catalyseur selon l'invention comprenant une phase active constituée uniquement d'un élément du groupe VIB, l'élément du groupe VIB étant le molybdène et le catalyseur étant sous forme sulfure, et éventuellement un support mésoporeux de type alumine, présente une sélectivité très élevée pour les réactions d'hydrodésoxygénation et permet de limiter les réactions de décarboxylation / décarbonylation et ainsi de limiter les inconvénients engendrés par la formation d'oxydes de carbone.

Le catalyseur permet donc de :
1/ maximiser le rendement en base carburant, gazole et kérosène,
2/ limiter la corrosion carbonique,
3/ faciliter la purification de l'hydrogène de recycle,
4/ limiter les réactions de méthanation entraînant une consommation accrue d'hydrogène pour des réactions sans valeur ajoutée.

Les produits, base gazole et kérosène, obtenus selon le procédé selon l'invention sont dotés d'excellentes caractéristiques.

La base gazole obtenu, après mélange avec un gazole pétrolier issu de charge renouvelable telles que le charbon ou la biomasse lignocellulosique, et/ou avec un additif, est d'excellente qualité :
- sa teneur en soufre est inférieure à 10 ppm poids.
- sa teneur en aromatiques totaux est inférieure à 5% poids, et la teneur en polyaromatiques inférieure à 2% poids.
- l'indice de cétane est excellent, supérieur à 55.
- la densité est inférieure à 840 kg/m3, et le plus souvent supérieure à 820 kg/m3.
- Sa viscosité cinématique à 40°C est 2 à 8 mm2/s.
- ses propriétés de tenue à froid sont compatibles avec les normes en vigueur, avec une température limite de filtrabilité inférieure à -15°C et un point de trouble inférieur à -5°C.

La coupe kérosène obtenue , après mélange avec un kérosène pétrolier issu de charge renouvelable telles que le charbon ou la biomasse lignocellulosique et/ou avec un additif présente les caractéristiques suivantes :
- une densité comprise entre 775 et 840 kg/m3
- une viscosité à -20°C inférieure à 8 mm2/s
- un point de disparition de cristaux inférieur à -47°C
- un point éclair supérieur à 38°C
- un point de fumée supérieur à 25 mm.

### Description de l'invention

La présente invention utilise un catalyseur supporté ou massique comprenant une phase active constituée d'un élément sulfuré du groupe VIB, l'élément du groupe VIB étant le molybdène, ledit catalyseur, dans le cas ou celui ci est un catalyseur supporté, présentant une teneur en élément du groupe VIB comprise entre 17 et 35% poids d'oxyde dudit élément du groupe VIB par rapport à la masse totale du catalyseur et comprenant également un élément dopant choisi parmi le phosphore, le bore et le silicium, déposé sur ledit support.

Conformément à la présente invention, ledit catalyseur peut être supporté. Dans le cas ou ledit catalyseur est supporté, il comporte avantageusement un support minéral amorphe de préférence choisi dans le groupe formé par l'alumine, la silice, les silices-alumines, la magnésie, les argiles et les mélanges d'au moins deux de ces minéraux et de préférence ledit support est l'alumine. Ledit support peut également avantageusement renfermer d'autres composés tels que par exemple des oxydes choisis dans le groupe formé par l'oxyde de bore, la zircone et l'oxyde de titane.

De manière préférée, le support minérale amorphe est constitué uniquement d'alumine et de manière très préférée uniquement d'alumine η, δ ou γ. Ainsi, dans ce mode de réalisation préféré, ledit support ne contient aucun autre composé et est constitué à 100% d'alumine.

Dans le cas où ledit catalyseur est sous forme supportée, la teneur en élément du groupe VIB est avantageusement entre 18 et 33% poids et de manière très préférée entre 20 et 32% poids d'oxyde de l'élément du groupe VIB par rapport à la masse totale du catalyseur. Conformément à l'invention, et dans le cas ou ledit catalyseur est sous forme supporté, ledit catalyseur comprend également au moins un élément dopant choisis parmi le phosphore, le fluor et le bore et de préférence, l'élément dopant est le phosphore, afin d'atteindre un niveau de conversion élevé tout en maintenant une sélectivité de réaction pour la voie d'hydrodésoxygénation.

Conformément à l'invention, et dans le cas ou ledit catalyseur est sous forme supporté, ledit élément dopant est avantageusement déposé sur le support. On peut également avantageusement déposer du silicium sur le support, seul ou avec le phosphore et/ou le bore et/ou le fluor.

Il est connu de l'homme de l'art que ces éléments ont des effets indirect sur l'activité catalytique : une meilleure dispersion de la phase active sulfurée et une augmentation de l'acidité du catalyseur favorable aux réactions d'hydrotraitement (Sun et al, Catalysis Today 86(2003) 173).

Dans le cas ou ledit catalyseur est sous forme supportée, la teneur en élément dopant, ledit élément dopant étant de préférence le phosphore, est avantageusement strictement supérieure à 0,5% et inférieure à 8 % poids d'oxyde P₂O₅ par rapport à la masse totale du catalyseur et de préférence supérieure à 1% et inférieure à 8% et de manière très préférée supérieure à 3% et inférieure à 8% poids.

Un catalyseur préféré est un catalyseur supporté comprenant une phase active constituée d'un élément sulfuré du groupe VIB, l'élément du groupe VIB étant le molybdène et un support minéral amorphe constitué uniquement d'alumine, ledit catalyseur présentant une teneur en élément du groupe VIB comprise entre 17 et 35% poids d'oxyde dudit élément du groupe VIB par rapport à la masse totale du catalyseur et comprenant également un élément dopant choisis parmi le phosphore, le bore et le silicium, déposé sur ledit support.

Dans le cas de l'utilisation de catalyseur supporté, la fonction hydrogénante peut être introduite sur ledit catalyseur par toute méthode connue de l'homme du métier comme par exemple le comalaxage, l'imprégnation à sec etc....

Conformément à la présente invention, ledit catalyseur peut alternativement être massique, dans ce cas, ledit catalyseur ne contient pas de support.

Dans le cas où ledit catalyseur est sous forme massique, la teneur en élément du groupe VIB est avantageusement comprise entre 92 et 100% poids d'oxyde de l'élément du groupe VIB par rapport à la masse totale du catalyseur, de préférence supérieur à 92% et strictement inférieure à 99,5% poids, de manière préférée comprise entre 92 et 99% poids et de manière très préférée, comprise entre 92 et 97% poids.

Le catalyseur selon l'invention, dans le cas ou ledit catalyseur est sous forme massique, peut également avantageusement contenir au moins un élément dopant choisis parmi le phosphore, le fluor et le bore et de préférence, l'élément dopant est le phosphore, afin d'atteindre un niveau de conversion élevé tout en maintenant une sélectivité de réaction pour la voie d'hydrodésoxygénation.

Dans le cas ou ledit catalyseur est sous forme massique, ledit élément dopant est avantageusement déposé sur la phase active.

Dans le cas ou ledit catalyseur est sous forme massique, la teneur en élément dopant, ledit élément dopant étant de préférence le phosphore, est avantageusement strictement supérieure à 0,5% et inférieure à 8 % poids d'oxyde P₂O₅ par rapport à la masse totale du catalyseur et de préférence supérieure à 1% et inférieure à 8% et de manière très préférée supérieure à 3% et inférieure à 8% poids.

Dans le cas ou ledit catalyseur est sous forme massique, il est obtenu à partir de toutes méthodes de synthèse connues de l'homme du métier telles que la sulfuration directe des précurseurs oxydes et la décomposition thermique de thiosel métallique.

La présente invention est par ailleurs particulièrement dédiée à la préparation de bases carburant gazoles correspondant aux nouvelles normes environnementales et de coupes kérosène répondant aux spécifications, à partir de charges issues de sources renouvelables.

La présente invention a donc pour objet un procédé d'hydrodésoxygénation avec conversion par décarboxylation/décarbonylation limitée à au plus 10%, de charges issues de sources renouvelables mettant en oeuvre ledit catalyseur à une température comprise entre 120 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 50 et 3000 Nm³ d'hydrogène/m³ de charge.

L'utilisation du catalyseur dans le procédé selon l'invention permet de limiter la formation d'oxyde de carbone pour les raisons évoquées précédemment en limitant les réactions de décarboxylation / décarbonylation.

Dans le cadre de l'invention, il est ainsi possible de maintenir une conversion globale de la charge issue de source renouvelable, c'est à dire une conversion par hydrodésoxygénation et décarboxylation/décarbonylation confondue, avantageusement supérieure ou égale à 90 % et de préférence une conversion globale de la charge égale à 100 %, tout en maximisant le rendement en produit d'hydrodésoxygénation ou conversion par hydrodésoxygénation qui reste, conformément à l'invention, supérieur ou égale à 90% et de préférence supérieur ou égale à 95% et de manière préférée, supérieure ou égale à 96%, .

La conversion par décarboxylation/décarbonylation ou rendement en produit de décarboxylation/décarbonylation de la charge issue de sources renouvelables est avantageusement limitée à au plus 10%, et de préférence limitée à au plus 5% et de manière plus préférée à au plus 4%.

La réaction d'hydrodésoxygénation conduit à la formation d'eau par consommation d'hydrogène et à la formation d'hydrocarbures de nombre de carbone égal à celui des chaînes d'acides gras initial. L'effluent issu de l'hydrodésoxygénation comporte des composés hydrocarbures pairs, tels que les hydrocarbures C14 à C24 et sont largement majoritaires par rapport aux composés hydrocarbures impairs, tels que C15 à C23, obtenu par les réactions de décarbonylation/décarboxylation. La sélectivité pour la voie hydrodésoxygénation est mise en évidence par la mesure du rendement total en hydrocarbure ayant un nombre d'atome de carbone pair et du rendement total en hydrocarbure ayant un nombre d'atome de carbone impair dans la fraction liquide valorisable en carburant. Les rendements en hydrocarbures pairs et impairs permettant d'accéder à la sélectivité de réaction (HDO/décarbonylation/décarboxylation) sont obtenus par analyse chromatographique en phase gazeuse des effluents liquides de réaction valorisable en carburant. La technique de mesure par analyse chromatographique en phase gazeuse est une méthode connue de l'homme du métier.

Un critère de sélectivité par HDO est le rapport du rendement total en hydrocarbure ayant un nombre d'atome de carbone pair et du rendement total en hydrocarbure ayant un nombre d'atome de carbone impair.

Conformément au procédé d'hydrodésoxygénation selon l'invention, la charge, éventuellement prétraitée, est mise au contact d'un catalyseur selon l'invention à une température comprise entre 120 et 450°C, de préférence entre 120 et 350°C, de manière préférée entre 150 et 320°C, et de manière encore plus préférée entre 180 et 310°C. La pression est comprise entre 1 MPa et 10 MPa, de manière préférée entre 1 MPa et 6 MPa. La vitesse spatiale horaire est comprise entre 0,1 h⁻¹ et 10 h⁻¹. La charge est mise au contact dudit catalyseur en présence d'hydrogène. La quantité totale d'hydrogène mélangée à la charge est telle que le ratio hydrogène/charge est compris entre 50 et 3000 Nm³ d'hydrogène/m³ de charge, de préférence entre 70 et 2000 Nm³ d'hydrogène/m³ de charge et de manière préférée compris entre 150 et 1500 Nm³ d'hydrogène/m³ de charge.

Le procédé d'hydrodésoxygénation selon l'invention est avantageusement mis en oeuvre en lit fixe ou en lit bouillonnant et de préférence en lit fixe.

Dans le cas ou le procédé d'hydrodésoxygénation est mis en oeuvre en lit fixe, ledit procédé opère à une température comprise entre 120 et 450°C, de préférence entre 120 et 350°C, de manière préférée entre 150 et 320°C, et de manière encore plus préférée entre 180 et 310°C. La pression est comprise entre 1 MPa et 10 MPa, de manière préférée entre 1 MPa et 6 MPa. La vitesse spatiale horaire est comprise entre 0,1 h⁻¹ et 10 h⁻¹. La charge est mise au contact dudit catalyseur en présence d'hydrogène. La quantité totale d'hydrogène mélangée à la charge est telle que le ratio hydrogène/charge est compris entre 50 et 3000 Nm³ d'hydrogène/m³ de charge, de préférence entre 70 et 2000 Nm³ d'hydrogène/m³ de charge et de manière préférée compris entre 150 et 1500 Nm³ d'hydrogène/m³ de charge.

Dans le cas ou le procédé d'hydrodésoxygénation est mis en oeuvre en lit bouillonnant, ledit procédé opère sous une pression absolue 2 à 35 MPa, de préférence de 2 à 15 MPa et de manière préférée, de 3 à 10 MPa, à une température comprise entre 200 et 450°C, et de préférence entre 250 et 380°C, à une WH comprise entre 0,1 h-1 et 10 h-1 et de préférence comprise entre 0,5 h-1 et 5 h-1 et à une quantité d'hydrogène mélangée à la charge comprise entre 50 et 5000 normaux mètres cube (Nm3) par mètre cube (m3) de charge liquide, de préférence entre 100 à 1000 Nm3/m3 et de manière préférée entre 200 et 500 Nm3/m3.

On ne sortirait pas du cadre de la présente invention en utilisant dans le procédé d'hydrodésoxygénation selon l'invention, un seul catalyseur ou plusieurs catalyseurs différents selon l'invention, de manière simultanée ou de manière successive. Ledit procédé peut avantageusement être effectué industriellement dans un ou plusieurs réacteurs avec un ou plusieurs lits catalytiques et de préférence à courant descendant mixte de gaz et de liquide. Ce type de réacteur est communément appelé par l'homme de l'art réacteur à lit fixe et écoulement ruisselant.

Il est bien connu de l'homme de l'art que les réactions mises en oeuvre sont très exothermiques. C'est dire qu'elles s'accompagnent du dégagement d'une importante quantité de chaleur. Il en résulte une forte augmentation de la température du milieu réactionnel qui peut entraîner des effets indésirables. Par ailleurs, la température a un effet d'augmentation de la vitesse de la réaction qui va alors dégager encore plus de chaleur. Ce type de phénomène auto-entretenu doit impérativement être contrôlé sous peine de le voir diverger vers des températures très élevées pouvant atteindre des niveaux supérieurs aux points de fusions des matériaux du réacteur. Sans aller jusqu'à cette extrémité, les températures élevées favorisent les réactions de craquage formant des hydrocarbures légers (Méthane, éthane) difficilement valorisables et diminuant d'autant la quantité de paraffines produites. D'une façon générale il apparaît indispensable de contrôler l'augmentation de température liée à la mise en oeuvre des réactions exothermiques visées par l'invention tant pour des raisons de sécurité que de rendement global du procédé.

Pour cela différentes techniques bien connues de l'homme de l'art sont envisageables comme par exemple la méthode décrite dans le brevet WO2008/058664.

De manière avantageuse, la charge peut être préalablement pré-traitée ou pré-raffinée de façon à éliminer, par un traitement approprié, des contaminants présents naturellement dans les bio-liquides d'origine renouvelable tels que les métaux alcalins, alcalino-terreux, et métaux de transition ainsi que l'azote. Des traitements appropriés peuvent par exemple être des traitements thermiques et/ou chimiques, bien connus de l'homme du métier du raffinage.

De manière préférée, le prétraitement optionnel consiste en une pre-hydrogénation douce de ladite charge de façon hydrogéner les insaturations réactives. La pré-hydrogénation douce opère avantageusement à une température comprise entre 50 et 400 °C et à une pression d'hydrogène comprise entre 0,1 et 10 MPa et de manière préférée, à une température comprise entre 150 et 200 °C. Le catalyseur de pré-hydrogénation comprend avantageusement des métaux du groupe VIII et/ou VIB et de manière préférée, le catalyseur de pré-hydrogénation est un catalyseur à base de palladium, de platine de nickel, de nickel et de molybdène ou à base de cobalt et de molybdène, dispersé sur un oxyde métallique ou un mélange d'oxyde tels que les alumines, silices, titane, zéolithe.

Les métaux des catalyseurs utilisés dans l'étape de prétraitement optionnel du procédé selon l'invention sont des métaux sulfurés ou des phases métalliques et de préférence des phases métalliques.

Dans le but de produire un carburant gazole présentant des propriétés améliorées, l'effluent hydrocarboné est ensuite traité selon les étapes optionnelles suivantes :
L'effluent issu du procédé d'hydrodésoxygénation selon l'invention subit ensuite au moins une étape de séparation et de préférence une étape de séparation gaz/liquide et de séparation de l'eau et d'au moins une base hydrocarbonée liquide, lesdites étapes étant optionnelles et pouvant être mises en oeuvre dans un ordre indifférent l'une par rapport à l'autre.

De préférence, L'effluent issu du procédé d'hydrodésoxygénation selon l'invention subit une étape de séparation gaz/liquide. Le but de cette étape est de séparer les gaz du liquide, et notamment, de récupérer les gaz riches en hydrogène pouvant contenir également des gaz tels que CO, le CO₂, l'H2S et le propane et au moins un effluent liquide, lesdits gaz pouvant avantageusement être également purifiés par des méthodes connues de l'homme du métier telles que la méthanation pour la transformation du CO en CO2 et le lavage aux amines pour l'élimination du CO2.

De préférence, l'effluent liquide issu de la séparation gaz/liquide optionnelle précédente subit ensuite une séparation d'au moins une partie et de préférence la totalité de l'eau formée, d'au moins une base hydrocarbonée liquide, l'eau étant produite lors des réactions d'hydrodésoxygénation.

Le but de cette étape est de séparer l'eau de l'effluent hydrocarboné liquide. On entend par élimination de l'eau, l'élimination de l'eau produite par les réactions d'hydrodésoxygénation (HDO). L'élimination plus ou moins complète de l'eau est avantageusement fonction de la tolérance à l'eau du catalyseur d'hydroisomérisation utilisé dans l'étape optionnelle suivante du procédé selon l'invention. L'élimination de l'eau peut être réalisée par toutes les méthodes et techniques connues de l'homme du métier, telles que par exemple par séchage, passage sur un dessicant, flash, extraction par solvant, distillation et décantation ou par association d'au moins deux de ces méthodes.

De façon optionnelle, une étape de purification finale des différents polluants peut être mise en oeuvre par des méthodes connues de l'homme du métier telles que par exemple par strippage à la vapeur ou à l'azote ou par coalescence et/ou masse de captation. Une étape d'élimination des composés azotés de ladite base hydrocarbonée obtenue peut avantageusement être mise en oeuvre entre l'étape d'hydrodésoxygénation selon l'invention et une étape optionnelle d'hydroisomérisation.

De préférence, une étape d'élimination des composés azotés est mise en oeuvre après ladite étape optionnelle de séparation de l'eau et de préférence après ladite étape de purification finale.

La base hydrocarbonée issue de l'étape optionnelle précédente de séparation de l'eau ou de préférence de ladite étape de purification finale contient généralement des composés organiques azotés résiduels non éliminés lors des réactions d'hydrodésoxygénation du procédé selon l'invention. Lesdits composés organiques azotés résiduels sont des inhibiteurs des catalyseurs d'hydroisomérisation, ils doivent donc être éliminés de ladite base hydrocarbonée avant son passage dans une étape optionnelle d'hydroisomérisation. L'élimination des composés organiques azotés résiduels peut être réalisée par toutes les techniques connues de l'homme de métier, telles que par exemple l'utilisation de masses de captation. Nous entendons par masse de captation les alumines activées ou non, les silices-alumines, les zéolithes, les charbons actifs, et les résines échangeuses d'ions. De préférence, l'étape d'élimination des composés organiques azotés est mise en oeuvre sur une résine échangeuse d'ions.

Selon un mode de réalisation préféré, une partie au moins de la base hydrocarbonée liquide obtenue à l'issu de l'étape d'élimination des composés organiques azotés précédente est hydroisomérisée en présence d'un catalyseur d'hydroisomérisation sélective. Les catalyseurs d'hydroisomérisation utilisés sont avantageusement de type bifonctionnels, c'est-à-dire qu'ils possèdent une fonction hydro/déshydrogénante et une fonction hydroisomérisante.

Ledit catalyseur d'hydroisomérisation comprend avantageusement au moins un métal du groupe VIII et/ou au moins un métal du groupe VIB en tant que fonction hydrodéshydrogénante et au moins un tamis moléculaire ou un support minéral amorphe en tant que fonction hydroisomérisante.

Ledit catalyseur d'hydroisomérisation comprend avantageusement soit au moins un métal noble du groupe VIII de préférence choisi parmi le platine ou le palladium, actifs sous leur forme réduite, soit au moins un métal du groupe VI, de préférence choisi parmi le molybdène ou le tungstène, en combinaison avec au moins un métal non noble du groupe VIII, de préférence choisi parmi le nickel et le cobalt, utilisés de préférence sous leur forme sulfurée.

Dans le cas où le catalyseur d'hydroisomérisation comprend au moins un métal noble du groupe VIII, la teneur totale en métal noble du catalyseur d'hydroisomérisation utilisé dans l'étape d) du procédé selon l'invention, est avantageusement comprise entre 0,01 et 5% en poids par rapport au catalyseur fini, de manière préférée entre 0,1 et 4% en poids et de manière très préférée entre 0,2 et 2% en poids.

De préférence, le catalyseur d'hydroisomérisation comprend le platine ou le palladium et de manière préférée, le catalyseur d'hydroisomérisation comprend le platine.

Dans le cas où le catalyseur d'hydroisomérisation comprend au moins un métal du groupe VIB en combinaison avec au moins un métal non noble du groupe VIII, la teneur en métal du groupe VIB du catalyseur d'hydroisomérisation utilisé dans l'étape c) du procédé selon l'invention, est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids.

La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange.

Selon un mode de réalisation préféré, ledit catalyseur d'hydroisomérisation comprend au moins un support minéral amorphe en tant que fonction hydroisomérisante, ledit un support minéral amorphe étant choisi parmi les silice-alumines et alumines silicées et de manière préféré les silice-alumines.

Selon un autre mode de réalisation préféré, ledit catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Olson and Ch. Baerlocher, 5th revised édition, 2001, Elsevier auquel se réfère également la présente demande. Les zéolithes y sont classées selon la taille de leurs ouvertures de pores ou canaux.

Les tamis moléculaires zéolithiques 10 MR monodimensionnel présentent des pores ou canaux dont l'ouverture est définie par un anneau à 10 atomes d'oxygène (ouverture à 10 MR). Les canaux du tamis moléculaire zéolithique ayant une ouverture à 10 MR sont avantageusement des canaux monodimensionnels non interconnectés qui débouchent directement sur l'extérieur de ladite zéolithe. Les tamis moléculaires zéolithiques 10 MR monodimensionnels présents dans ledit catalyseur d'hydroisomérisation comprennent avantageusement du silicium et au moins un élément T choisi dans le groupe formé par l'aluminium, le fer, le gallium, le phosphore et le bore, de préférence l'aluminium. Les rapports Si/Al des zéolithes décrites ci-dessus sont avantageusement ceux obtenus à la synthèse ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques. Elles sont, de préférence, pratiquement totalement, sous forme acide, c'est-à-dire que le rapport atomique entre le cation de compensation monovalent (par exemple le sodium) et l'élément T inséré dans le réseau cristallin du solide est avantageusement inférieur à 0,1, de préférence inférieur à 0,05 et de manière très préférée inférieur à 0,01. Ainsi, les zéolithes entrant dans la composition dudit catalyseur sélectif d'hydroisomérisation sont avantageusement calcinées et échangées par au moins un traitement par une solution d'au moins un sel d'ammonium de manière à obtenir la forme ammonium des zéolithes qui, une fois calcinée, conduisent à la forme acide desdites zéolithes.

Ledit tamis moléculaire zéolithique 10 MR monodimensionnel dudit catalyseur d'hydroisomérisation est avantageusement choisi parmi les tamis moléculaires zéolithiques de type structural TON, tel que la NU-10 ,FER, tel que la ferrierite, EUO, choisis parmi la EU-1 et la ZSM-50, prises seules ou en mélange, ou les tamis moléculaires zéolithiques ZSM-48, ZBM-30, IZM-1, COK-7, EU-2 et EU-11, pris seul ou en mélange. De manière préférée, ledit tamis moléculaire zéolithique 10 MR monodimensionnel est choisi parmi les tamis moléculaires zéolithiques ZSM-48, ZBM-30, IZM-1 et COK-7, pris seul ou en mélange. De manière encore plus préférée, ledit tamis moléculaire zéolithique 10 MR monodimensionnel est choisi parmi les tamis moléculaires zéolithiques ZSM-48 et ZBM-30, pris seul ou en mélange.
De manière très préférée, ledit tamis moléculaire zéolithique 10 MR monodimensionnel est la ZBM-30 et de manière encore plus préférée, ledit tamis moléculaire zéolithique 10 MR monodimensionnel est la ZBM-30 synthétisée avec le structurant organique triéthylènetétramine.

De préférence, le catalyseur d'hydroisomérisation comprend une phase active métallique constituée de platine et une fonction hydroisomérisante à base de ZBM-30 et de manière préférée, le catalyseur d'hydroisomérisation comprend une phase active métallique constituée de platine et une fonction hydroisomérisante à base de ZBM-30 synthétisée avec le structurant organique triéthylènetétramine.

La zéolithe ZBM-30 est décrite dans le brevet EP-A-46 504, et la zéolithe COK-7 est décrite dans les demandes de brevet EP 1 702 888 A1 ou FR 2 882 744 A1.

La zéolithe IZM-1 est décrite dans la demande de brevet FR-A-2 911 866.

Les zéolithes de type structural TON sont décrites dans l'ouvrage "Atlas of Zeolithe Structure Types", W.M. Meier, D.H. Olson and Ch. Baerlocher, 5th Revised édition, 2001, Elsevier.

La zéolithe de type structural TON est décrite dans l'ouvrage "Atlas of Zeolithe Structure Types", ci-dessus cité et en ce qui concerne la zéolithe NU-10, dans les brevets EP-65400 et EP-77624.
La zéolithe ZSM 48 est décrite dans Schlenker, J.L. Rohrbaugh, W.J., Chu, P., Valyocsik, E.W. and Kokotailo, G.T. Title: The framewrok topolgy of ZSM-48: a high silica zeolite Reference: Zeolites, 5, 355-358 (1985) Material *ZSM-48".

La zéolithe de type structural FER est décrite dans l'ouvrage "Atlas of Zeolithe Structure Types", ci-dessus cité.
La teneur en tamis moléculaire zéolithique 10 MR monodimensionnel est avantageusement comprise entre 5 et 95% poids, de préférence entre 10 et 90% poids, de manière plus préférée entre 15 et 85% poids et de manière très préférée entre 20 et 80% poids par rapport au catalyseur fini.

De préférence, ledit catalyseur d'hydroisomérisation comprend également un liant constitué d'une matrice minérale poreuse. Ledit liant peut avantageusement être utilisé durant l'étape de mise en forme dudit catalyseur d'hydroisomérisation.

De préférence, la mise en forme est réalisée avec un liant constitué d'une matrice contenant de l'alumine, sous toutes ses formes connues de l'homme du métier, et de manière très préférée avec une matrice contenant de l'alumine gamma.

Les catalyseurs d'hydroisomérisation obtenus sont avantageusement mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. D'autres techniques que l'extrusion, telles que le pastillage ou la dragéification, peuvent avantageusement être utilisées.

Dans le cas où le catalyseur d'hydroisomérisation contient au moins un métal noble, le métal noble contenu dans ledit catalyseur d'hydroisomérisation doit avantageusement être réduit. Une des méthodes préférées pour conduire la réduction du métal est le traitement sous hydrogène à une température comprise entre 150°C et 650°C et une pression totale comprise entre 1 et 250 bar. Par exemple, une réduction consiste en un palier à 150°C de deux heures puis une montée en température jusqu'à 450°C à la vitesse de 1°C/min puis un palier de deux heures à 450°C ; durant toute cette étape de réduction, le débit d'hydrogène est de 1000 normaux m³ hydrogène / m³ catalyseur et la pression totale maintenue constante à 1 bar. Toute méthode de réduction ex-situ peut avantageusement être envisagée.

Dans l'étape d'hydroisomérisation, la charge est avantageusement mise en contact, en présence d'hydrogène avec ledit catalyseur d'hydroisomérisation, à des températures et des pressions opératoires permettant avantageusement de réaliser une hydroisomérisation de la charge non convertissante. Cela signifie que l'hydroisomérisation s'effectue avec une conversion de la fraction 150°C⁺ en fraction 150°C⁻ inférieure à 20% en poids, de manière préférée inférieure à 10% en poids et de manière très préférée inférieure à 5% en poids.

Ainsi, l'étape optionnelle d'hydroisomérisation du procédé selon l'invention opère avantageusement à une température comprise entre 150 et 500°C, de préférence entre 150°C et 450°C, et de manière très préférée, entre 200 et 450°C, à une pression comprise entre 1 MPa et 10 MPa, de préférence entre 2 MPa et 10 MPa et de manière très préférée, entre 1 MPa et 9 MPa, à une vitesse volumique horaire avantageusement comprise entre 0,1 h⁻¹ et 10 h⁻¹, de préférence entre 0,2 et 7 h⁻¹ et de manière très préférée, entre 0,5 et 5 h⁻¹, à un débit d'hydrogène tel que le rapport volumique hydrogène/hydrocarbures est avantageusement compris entre 70 et 1000 Nm³/m³ de charge, entre 100 et 1000 normaux m³ d'hydrogène par m³ de charge et de manière préférée entre 150 et 1000 normaux m³ d'hydrogène par m³ de charge.

De manière préférée, l'étape d'hydroisomérisation éventuelle opère à co-courant.

L'effluent hydroisomérisé est ensuite avantageusement soumis au moins en partie, et de préférence en totalité, à une ou plusieurs séparations. Le but de cette étape est de séparer les gaz du liquide, et notamment, de récupérer les gaz riches en hydrogène pouvant contenir également des légers tels que la coupe C₁ - C₄ et au moins une coupe gazole et une coupe naphta. La valorisation de la coupe naphta n'est pas l'objet de la présente invention, mais cette coupe peut avantageusement être envoyée dans une unité de vapocraquage ou de reformage catalytique.

### Traitement et recyclage des gaz

Le gaz contenant l'hydrogène qui a été séparé lors de l'étape de séparation optionnelle issue du procédé d'hydordésoxygénation selon l'invention et/ou de l'étape optionnelle d'hydroisomérisation, est, si nécessaire, avantageusement au moins en partie traité pour réduire sa teneur en légers (C₁ à C₄).

La possibilité existe d'additionner au gaz de recyclage issu de l'étape de séparation optionnelle précédente une certaine quantité de composés soufrés tels que par exemple le DMDS, di-méthyl disulfure), qui par décomposition thermique produit de l'hydrogène sulfuré H₂S. Ce dispositif permet de maintenir si nécessaire le catalyseur d'hydrotraitement et/ou le catalyseur d'hydroisomérisation à l'état sulfuré. De façon avantageuse, la quantité de composé soufré introduite est telle que la teneur en H₂S dans le gaz de recycle est au moins de 15 ppm volume, de préférence d'au moins 0,1 % volume, voire d'au au moins 0.2 % volume.

On peut avantageusement introduire l'hydrogène de recycle avec la charge entrant dans le procédé d'hydrodésoxygénation selon l'invention et/ou dans l'étape d'hydroisomérisation optionnelle sous forme d'hydrogène de trempe entre les lits de catalyseurs d'hydrodésoxygénation selon l'invention et/ou d'hydroisomérisation.

L'exemple qui suit précise l'invention sans toutefois en limiter sa portée.

### Exemple :

### Hydrodésoxygénation : Comparaison de performances des catalyseurs MoP/Al₂O₃ selon l'invention et NiMoP/Al₂O₃ non conforme à l'invention.

Dans un réacteur isotherme et à lit fixe chargé de 100 mL de catalyseur d'hydrotraitement, on introduit 50 mL/h huile de colza pré-raffinée de densité 920 kg/m³ présentant une teneur en soufre inférieure à 10 ppm poids, d'indice de cétane de 35. 700 Nm³ d'hydrogène/m³ de charge sont introduits dans le réacteur maintenu à une température de 300°C et à une pression de 5 MPa. Les principales caractéristiques de la charge d'huile de colza utilisée pour la comparaison des catalyseurs MoP/Al₂O₃ (HDT1) selon l'invention et NiMoP/Al₂O₃ (HDT2) non conformes à l'invention sont reportées dans le Tableau 1.

Le catalyseur HDT1 utilisé selon l'invention est constitué d'un élément du groupe VIB, le molybdène, et de phosphore à des teneurs respectivement de 25,3 %poids de MoO₃ et 6,1 %poids de P₂O₅ supporté sur une alumine gamma.

Le catalyseur HDT2 utilisé à titre comparatif est constitué d'un élément du groupe VIB, le molybdène, de phosphore et d'un élément du groupe VIII, le nickel à des teneurs respectivement de 21 %poids de MoO₃, 5 %poids de P₂O₅ et 4,3 %poids de NiO dispersé sur le même type de support alumine. Dans les deux cas le rapport massique Mo/P est gardé constant. Les catalyseurs sont préparés par imprégnation à sec des précurseurs oxydes en solution aqueuse. La méthode de préparation ne limite pas la portée de l'invention.

**Tableau 1**

| Propriétés de la charge | Valeurs |
|---|---|
| *Analyse élémentaire* | |
| S [ppm pds] | 4 |
| N [ppm pds] | 23 |
| P [ppm pds] | 177 |
| C [%pds] | 77,2 |
| H [%pds] | 11,6 |
| O [%pds] | 11,2 |

| *Composition en acide gras* (%) | |
|---|---|
| 14:0 | 0,1 |
| 16:0 | 5,0 |
| 16:1 | 0,3 |
| 17:0 | 0,1 |
| 17:1 | 0,1 |
| 18:0 | 1,5 |
| 18:1 trans | <0,1 |
| 18:1 cis | 60,1 |
| 18:2 trans | <0,1 |
| 18:2 cis | 20,4 |
| 18:3 trans | <0,1 |
| 18:3 cis | 9,6 |
| 20:0 | 0,5 |
| 20:1 | 1,2 |
| 22:0 | 0,3 |
| 22:1 | 0,2 |
| 24:0 | 0,1 |
| 24:1 | 0,2 |

Les catalyseurs HDT1 et HDT2 sont évalués sous leur forme sulfure et sont sulfurés in-situ préalablement au test à l'aide d'une charge gazole de distillation directe additivée de DMDS. Après sulfuration in situ réalisée à 350 °C dans l'unité sous pression par addition de 2 % en poids de diméthyldisulfure au gazole de distillation directe, la charge a été modifiée pour une charge constituée à 100 % d'huile de colza.

Afin de maintenir le catalyseur à l'état sulfure, l'huile de colza est additivée de 50 ppm pds de soufre sous forme de DMDS. Les conditions de réactions le DMDS est totalement décomposé pour former du méthane et de l'H₂S.

Les résultats obtenus pour les catalyseurs HDT1 et HDT2 sont reportés dans le Tableau 2.

**Tableau 2**

| | HDT2 (non conformes) | HDT1 (selon l'invention) |
|---|---|---|
| Conditions opératoires | | |
| Température [°C] | 300 | 300 |
| Pression [MPa] | 5 | 5 |
| H₂/charge [Nm³/m³] | 700 | 700 |
| teneur en soufre [ppm pds] | 50 | 50 |

| Résultats | | |
|---|---|---|
| Conversion globale (HDO/DCO) [%pds] | 100 | 100 |
| HC pairs / HC impairs* [%pds / %pds] | 4,6 | 36,4 |
| Rendement totale en hydrocarbures pairs et impairs [%pds] | 81 | 85 |
| Rendement en HDO dans l'effluent hydrocarboné valorisable liquide %pds | 82,2 | 97,3 |
| Rendement en DCO dans l'effluent hydrocarboné valorisable liquide %pds | 17,8 | 2,7 |

| | | |
|---|---|---|
| *HC pairs = hydrocarbures C₁₄-C₂₄ ; HC impairs = hydrocarbures C₁₅-C₂₃ | | |

Nous constatons que dans les mêmes conditions de réaction et pour une conversion totale de l'huile de colza, le catalyseur sans nickel présente une sélectivité pour la voie d'hydrodésoxygénation bien plus importante que pour le catalyseur en présence de nickel conduisant de manière très sélective à la formation de plus de 97%poids d'hydrocarbures (C₁₄ à C₂₄) ayant un nombre d'atomes de carbone pair et de moins de 3 % poids d'hydrocarbures (C₁₅-C₂₃) ayant un nombre d'atomes de carbone impair. Ceci implique donc d'une part la production de paraffines à nombre de carbones plus important et d'autre part à limiter très fortement la formation d'oxydes de carbone (CO et CO₂). Également, le rendement en hydrocarbures valorisable en carburant gazole est ainsi amélioré de manière significative (85 %poids en présence du catalyseur HDT1 et 81 %poids en présence du catalyseur HDT2). (Les rendements massiques indiqués sont obtenus par analyse par chromatographie en phase gazeuse des effluents liquides de réaction valorisable en carburant).

### Séparation de l'effluent issu de l'étape d'hydrodésoxygénation.

La totalité de l'effluent hydrotraité issu de l'étape a) est séparée de manière à récupérer les gaz riches en hydrogène et une base gazole liquide.

### Hydroisomérisation de l'effluent hvdrotraité issu de l'étape de séparation sur un catalyseur d'hydroisomérisation

Le catalyseur d'hydroisomérisation est un catalyseur contenant un métal noble et une zéolithe 10 MR monodimensionnelle ZBM-30. Ce catalyseur est obtenu selon le mode opératoire décrit ci-après. La zéolithe ZBM-30 est synthétisée selon le brevet BASF EP-A-46504 avec le structurant organique triéthylènetétramine. La zéolithe ZBM-30 brute de synthèse est soumise à une calcination à 550 °C sous flux d'air sec durant 12 heures. La zéolithe H-ZBM-30 (forme acide) ainsi obtenue possède un rapport Si/AI de 45. La zéolithe est malaxée avec un gel d'alumine de type SB3 fourni par la société Condéa-Sasol. La pâte malaxée est alors extrudée au travers d'une filière de diamètre 1.4 mm. Les extrudés ainsi obtenus sont calcinés à 500 °C durant 2 heures sous air. La teneur pondérale H-ZBM-30 est de 20 % poids. Ensuite, les extrudés de support sont soumis à une étape d'imprégnation à sec par une solution aqueuse du sel de platine Pt(NH₃)₄²⁺, 2OH-, ils subissent ensuite une étape de maturation en maturateur à eau durant 24 heures à température ambiante puis calcinés durant deux heures sous air sec en lit traversé à 500°C (rampe de montée en température de 5°C/min). La teneur pondérale en platine du catalyseur fini après calcination est de 0.48%.

L'effluent obtenu après hydrotraitement de l'huile de colza en présence du catalyseur HDT1 (conforme à l'invention) est hydroisomérisé à hydrogène perdu (c'est à dire non recyclé) sur le catalyseur C1 dans un réacteur d'hydroisomérisation dans les conditions opératoires ci-dessous:
- WH (volume de charge / volume de catalyseur / heure) = 1 h⁻¹
- pression totale de travail: 5 MPa
- rapport hydrogène / charge: 700 normaux litres / litre

La température est ajustée de manière à avoir une conversion de la fraction 150°C⁺ en fraction 150°C⁻ inférieure à 5% en poids lors de l'hydroisomérisation. Avant test, le catalyseur subit une étape de réduction dans les conditions opératoires suivantes:
- débit d'hydrogène: 1600 normaux litres par heure et par litre de catalyseur
- montée de température ambiante 120°C: 10 °C/min
- palier d'une heure à 120°C
- montée de 120°C à 450°C à 5°C/min
- palier de deux heures à 450°C
- pression : 0,1 MPa

L'effluent hydroisomérisé est ensuite caractérisé. Les rendements et les propriétés carburant sont reportés dans les tableau 3 , 4 et 5.

**Tableau 4 : rendement**

| | Rendement (%pds) |
|---|---|
| Rendement coupe 150°C- [%poids] | 3 |
| Rendement coupe 150°C-250°C (coupe kérosène [%poids] | 10 |
| Rendement coupe 250°C + (coupe gazole) [%poids] | 87 |

**Tableau 5 : caractérisation de la base gazole**

| | Caractéristique de la base gazole |
|---|---|
| Indice de cétane (ASTMD613) | 75 |
| Température limite de filtrabilité (°C) | -15 |
| Soufre (ppm pds) | 1 |
| densité (kg/m3) | 790 |
| teneur en aromatiques (% poids) | <0,2 |

**Tableau 6 : caractérisation de la base kérosène**

| | Caractéristique de la coupe kérosène |
|---|---|
| densité (kg/m3) | 770 |
| point de fumée (mm) supérieur à 25 mm. | 30 |
| viscosité (mm2/s) à -20°C à 8 | 6 |

Les spécifications densité, point de disparition des cristaux et point éclair sont atteints par mélange avec un kérosène pétrolier.

Le procédé selon l'invention permet donc l'obtention de bases gazole et kérosène tout en permettant de diminuer la production de naphtas.

## Revendications

1. Procédé d'hydrodésoxygénation de charges issues de sources renouvelables avec un rendement en produit d'hydrodésoxygénation supérieur ou égale à 90% mettant en œuvre un catalyseur supporté ou massique contenant une phase active étant la phase contenant le ou les éléments sous forme sulfure des groupes de métaux, cette phase étant constituée uniquement d'un élément sulfuré du groupe VIB, l'élément du groupe VIB étant le molybdène, ledit catalyseur, dans le cas ou celui ci est un catalyseur supporté, présentant une teneur en élément du groupe VIB comprise entre 17 et 35% poids d'oxyde dudit élément du groupe VIB par rapport à la masse totale du catalyseur et comprenant également un élément dopant choisis parmi le phosphore, le bore et le silicium, déposé sur ledit support, ledit procédé opérant à une température comprise entre 120 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 50 et 3000 Nm³ d'hydrogène/m³ de charge.

2. Procédé selon la revendication 1 dans lequel ledit catalyseur comporte un support minéral amorphe choisi dans le groupe formé par l'alumine, la silice, les silices-alumines, la magnésie, les argiles et les mélanges d'au moins deux de ces minéraux.

3. Procédé selon l'une des revendications 1 ou 2 dans lequel ledit catalyseur comporte un support minérale amorphe alumine.

4. Procédé selon l'une des revendications 1 à 3 dans lequel ledit catalyseur comporte un support minéral amorphe constitué uniquement d'alumine.

5. Procédé selon l'une des revendications 1 à 4 dans lequel ledit catalyseur contient une teneur en phosphore strictement supérieure à 0,5% et inférieure à 8 % poids d'oxyde P₂O₅ par rapport à la masse totale du catalyseur.

6. Procédé selon l'une des revendications 1 à 5 dans lequel ledit procédé est mis en œuvre en lit fixe.

7. Procédé selon l'une des revendications 1 à 5 dans lequel ledit procédé est mis en œuvre en lit bouillonnant.

8. Procédé selon l'une des revendications 1 à 7 dans lequel l'effluent issu de l'hydrodésoxygénation est soumis à au moins une étape de séparation et de préférence une étape de séparation gaz/liquide et de séparation de l'eau et d'au moins une base hydrocarbonée liquide.

9. Procédé selon la revendication 8 dans lequel une étape d'élimination des composés azotés de ladite base hydrocarbonée liquide est mise en œuvre après ladite étape optionnelle de séparation de l'eau.

10. Procédé selon l'une des revendications 1 à 9 dans lequel une partie au moins de la base hydrocarbonée liquide obtenue à l'issu de l'étape d'élimination des composés organiques azotés est hydroisomérisée en présence d'un catalyseur d'hydroisomérisation.

11. Procédé selon l'une des revendications 1 à 10 dans lequel ledit catalyseur d'hydroisomérisation comprend au moins un métal du groupe VIII et/ou au moins un métal du groupe VIB en tant que fonction hydrodéshydrogénante et au moins un support minéral amorphe en tant que fonction hydroisomérisante.

12. Procédé selon l'une des revendications 1 à 11 dans lequel ledit catalyseur d'hydroisomérisation comprend une phase active métallique constituée de platine et une fonction hydroisomérisante à base de ZBM-30.

## Patentansprüche

1. Verfahren zur Hydrodeoxygenierung von Einsatzstoffen erneuerbaren Ursprungs mit einem Ertrag an Hydrodeoxygenierungsprodukt größer oder gleich 90 %, das einen geträgerten oder Vollkatalysator einsetzt, der eine aktive Phase enthält, die die Phase ist, die das oder die Elemente in Schwefelform der Metallgruppen enthält, wobei diese Phase nur von einem schwefelhaltigen Element der Gruppe VIB gebildet ist, wobei das Element der Gruppe VIB Molybdän ist, wobei der Katalysator, falls dieser ein geträgerter Katalysator ist, einen Gehalt an Element der Gruppe VIB zwischen 17 und 35 Gew.-% Oxid des Elements der Gruppe VIB bezogen auf die Gesamtmasse des Katalysators aufweist, und auch umfassend ein Dotierungselement, ausgewählt aus Phosphor, Bor und Silizium, das auf den Träger aufgebracht wird, wobei das Verfahren bei einer Temperatur zwischen 120 und 450 °C, bei einem Druck zwischen 1 MPa und 10 MPa, bei einer stündlichen Raumgeschwindigkeit zwischen 0,1 h⁻¹ und 10 h⁻¹ und im Beisein einer derartigen Gesamtwasserstoffmenge im Gemisch mit dem Einsatzstoff, dass das Verhältnis Wasserstoff/Einsatzstoff zwischen 50 und 3000 Nm³ Wasserstoff/m³ Einsatzstoff beträgt, durchgeführt wird.

2. Verfahren nach Anspruch 1, bei dem der Katalysator einen amorphen mineralischen Träger umfasst, der in der Gruppe ausgewählt ist, die von Aluminiumoxid, Siliziumoxid, Silizium-Aluminiumoxiden, Magnesiumoxid, Ton und den Gemischen mindestens zweier dieser Minerale gebildet ist.

3. Verfahren nach einem der Ansprüche 1 oder 2, bei dem der Katalysator einen amorphen mineralischen Aluminiumoxidträger umfasst.

4. Verfahren nach einem der Ansprüche 1 bis 3, bei dem der Katalysator einen amorphen mineralischen Träger umfasst, der nur von Aluminiumoxid gebildet ist.

5. Verfahren nach einem der Ansprüche 1 bis 4, bei dem der Katalysator einen Phosphorgehalt unbedingt über 0,5 und unter 8 Gew.-% Oxid P₂O₅ bezogen auf die Gesamtmasse des Katalysators enthält.

6. Verfahren nach einem der Ansprüche 1 bis 5, wobei das Verfahren im Festbett eingesetzt wird.

7. Verfahren nach einem der Ansprüche 1 bis 5, wobei das Verfahren im Wirbelbett eingesetzt wird.

8. Verfahren nach einem der Ansprüche 1 bis 7, bei dem der aus der Hydrodeoxygenierung kommende Abfluss mindestens einem Trennungsschritt und vorzugsweise einem gas/flüssig Trennungsschritt und einem Trennungsschritt des Wassers und mindestens einer flüssigen Kohlenwasserstoffbasis unterzogen wird.

9. Verfahren nach Anspruch 8, bei dem ein Schritt der Beseitigung der Stickstoffverbindungen aus der flüssigen Kohlenwasserstoffbasis nach dem optionalen Trennungsschritt des Wassers eingesetzt wird.

10. Verfahren nach einem der Ansprüche 1 bis 9, bei dem mindestens ein Teil der flüssigen Kohlenwasserstoffbasis, die nach dem Schritt der Beseitigung der organischen Stickstoffverbindungen erhalten wird, im Beisein eines Hydroisomerisations-Katalysators hydroisomerisiert wird.

11. Verfahren nach einem der Ansprüche 1 bis 10, bei dem der Hydroisomerisations-Katalysator mindestens ein Metall der Gruppe VIII und/oder mindestens ein Metall der Gruppe VIB als hydrodehydrierende Funktion und mindestens einen amorphen mineralischen Träger als hydroisomerisierende Funktion umfasst.

12. Verfahren nach einem der Ansprüche 1 bis 11, bei dem der Hydroisomerisations-Katalysator eine aktive metallische Phase umfasst, die von Platin und einer hydroisomerisierenden Funktion auf Basis von ZBM-30 gebildet ist.

## Claims

1. A process for the hydrodeoxygenation of feedstock from renewable sources with a hydrodeoxygenation product yield which is more than or equal to 90%, using a supported or bulk catalyst containing an active phase which is a phase containing element(s) used in sulphur-containing form of metals groups, said phase being constituted only by a sulfur-containing group VIB element, the group VIB element being molybdenum, said catalyst in the case of a supported catalyst having a group VIB element content of between 17 and 35% by weight of oxide of said group VIB element in relation to the total mass of the catalyst and also comprising a doping element selected from phosphorus, boron and silicon, deposited on said support, said process being carried out at a temperature of between 120 and 450°C, at a pressure of between 1 MPa and 10 MPa, at an hourly space velocity of between 0.1 h⁻¹ and 10 h⁻¹ and in the presence of a total amount of hydrogen mixed with the charge such that the hydrogen/charge ratio is between 50 and 3000 Nm³ of hydrogen per m³ of charge.

2. The process according to claim 1, wherein said catalyst comprises an amorphous inorganic support selected from the group formed by alumina, silica, silica-aluminas, magnesia, clays and mixtures of at least two of those minerals

3. The process according to claim 1 or 2, wherein said catalyst comprises an alumina amorphous inorganic support.

4. The process according to of claim 1 to 3, wherein said catalyst comprises an amorphous inorganic support constituted only by alumina.

5. The process according to one of Claims 1 to 4, wherein said catalyst contains a phosphorus content which is strictly above 0.5% and below 8% by weight of P₂O₅ oxide in relation to the total mass of the catalyst.

6. The process according to one of Claims 1 or 5, wherein said process is carried out in fixed bed.

7. The process according to one of Claims 1 or 5, wherein said process is carried out in bubbling bed.

8. The process according to one of Claims 1 to 7, wherein the effluent resulting from hydrodeoxygenation undergoes at least one separation step, and, preferably, a gas/liquid separation step, and a separation step from water and from at least one liquid hydrocarbon base.

9. The process according to Claim 8, wherein a step for eliminating nitrogenous compounds from said liquid hydrocarbon base is carried out after said optional step of water separation.

10. The process according to one of Claims 1 to 9, wherein at least one part of the liquid hydrocarbon base obtained at the end of the step for elimination of the nitrogenous organic compounds is hydroisomerised in the presence of a hydroisomerisation catalyst.

11. The process according to one of Claims 1 to 10, wherein said hydroisomerisation catalyst comprises at least one group VIII metal and/or at least one group VIB metal as hydrodehydrogenating function and at least one amorphous inorganic support as hydroisomerising function.

12. The process according to one of Claims 1 to 11, wherein said hydroisomerisation catalyst comprises an active metal phase constituted by platinum and a ZBM-30-based hydroisomerising function.
